# EUROPEAN PATENT APPLICATION

(11) **EP 4 625 831 A1**
(43) Date of publication of application: **01.10.2025**
(21) Application number: 23909438.6
(22) Date of filing: 08.10.2023
(51) Int. Cl.: H04B 3/54

(54) **POWER LINE COMMUNICATION SYSTEM**

(30) Priority: 26.12.2022 CN 202211680128
(71) Applicant: HUAWEI DIGITAL POWER TECHNOLOGIES CO., LTD., Shenzhen Guangdong 518043 (CN)
(72) Inventor: QIN, Haijun, Shenzhen, Guangdong 518043 (CN); SHUI, Wei, Shenzhen, Guangdong 518043 (CN); YAO, Yuanlin, Shenzhen, Guangdong 518043 (CN); WU, Jian, Shenzhen, Guangdong 518043 (CN); XIAO, Huafeng, Shenzhen, Guangdong 518043 (CN)
(74) Representative: Epping - Hermann - Fischer
(86) International application number: PCT/CN2023/123337
(87) International publication number: WO 2024/139504

(57) **Abstract**

This application relates to the field of power line communication, and discloses a power line communication system. The power line communication system may include a power conversion device, a signal isolation circuit, a signal adjustment circuit, a transformer, and an operation circuit. An output end of the power conversion device is connected to a power line through the signal isolation circuit, and the signal isolation circuit may be configured to isolate an input signal of the power line to obtain a first noise signal of the power conversion device. A first input end of the signal adjustment circuit is connected to the output end of the power conversion device, and the signal adjustment circuit may be configured to perform phase inversion on a phase of the first noise signal and output a second noise signal. An input end of the transformer is connected to the power line, and the transformer may be configured to filter out a power signal in the input signal of the power line and then output a first signal. The operation circuit may be configured to output a first communication signal based on the first signal and the second noise signal.

## Description

This application claims priority to Chinese Patent Application No. 202211680128.8, filed with the China National Intellectual Property Administration on December 26, 2022 and entitled "POWER LINE COMMUNICATION SYSTEM", which is incorporated herein by reference in its entirety.

### TECHNICAL FIELD

This application relates to the field of power line communication technologies, and in particular, to a power line communication system.

### BACKGROUND

Power line communication (power line communication, PLC) is a communication technology in which a power line is used as a communication medium to transmit a signal in a carrier manner. PLC can be applied to a plurality of fields. For example, in a photovoltaic power generation system, an inverter and a host communicate with each other through a power line. The host may send a control signal to the inverter through the power line, to schedule each inverter. The inverter sends a service signal to the host through the power line, to report a device status of the inverter.

As power of the photovoltaic power generation system evolves, power of the inverter keeps increasing. Because a communication signal is integrated onto the power line, an increase in the power of the inverter inevitably causes noise deterioration on a PLC communication frequency band, and PLC communication performance also deteriorates. To resolve a noise problem, a current inverter usually uses an analog circuit at an inverter output stage to suppress power supply noise. However, because a photovoltaic array becomes increasingly large, a communication distance of a PLC system also continuously increases. In a long-distance communication scenario, the communication frequency band of the PLC system is relatively low. The analog circuit is large in volume at a low frequency, and therefore usually occupies a large board layout area. This does not facilitate a miniaturization design of a device.

### SUMMARY

This application provides a power line communication system. A power conversion device in the power line communication system can effectively reduce impact of power supply noise on a communication signal and improve reliability of the communication signal on a premise that a small size design is implemented.

According to a first aspect, this application provides a power line communication system. The power line communication system may include a power conversion device, a signal isolation circuit, a signal adjustment circuit, a transformer, and an operation circuit. An output end of the power conversion device is connected to a power line through the signal isolation circuit, and the signal isolation circuit may be configured to isolate an input signal of the power line to obtain a first noise signal of the power conversion device. A first input end of the signal adjustment circuit is connected to the output end of the power conversion device, and the signal adjustment circuit may be configured to perform phase inversion on a phase of the first noise signal and output a second noise signal. An input end of the transformer is connected to the power line, and the transformer may be configured to filter out a power signal in the input signal of the power line and then output a first signal. The operation circuit may be configured to output a first communication signal based on the first signal and the second noise signal.

In the foregoing solution, the first communication signal and the first noise signal are separated and the first noise signal is collected, and then the signal adjustment circuit is configured to perform phase inversion on the phase of the first noise signal and output the second noise signal to the operation circuit. In this way, the operation circuit may output the first communication signal based on the second noise signal and the first signal output by the transformer, so that suppression effect on power supply noise of the power conversion device can be implemented, impact of the power supply noise on the first communication signal can be effectively reduced, and reliability of the communication signal can be improved. In addition, this application is different from a conventional technology in that the signal isolation circuit occupies relatively small space. Therefore, this facilitates a miniaturization design of the system.

In some possible implementation solutions, the first signal may specifically include the first noise signal and the first communication signal. In this way, after the operation circuit superimposes the first signal and the second noise signal, the second noise signal and the first noise signal in the first signal may cancel each other out, to output the first communication signal.

In some possible implementation solutions, the signal isolation circuit includes but is not limited to an isolation capacitor or an isolation inductor.

For example, the signal isolation circuit may be specifically a differential-mode capacitor or a differential-mode inductor.

In some possible implementation solutions, the signal isolation circuit may be integrated into the power conversion device. In this way, board space occupied by the signal isolation circuit in the power conversion device can be reduced, which helps reduce a volume of the power conversion device.

In some possible implementation solutions, the signal adjustment circuit may be further configured to adjust an amplitude of the first noise signal, so that an amplitude of the second noise signal output by the signal adjustment circuit can be closer to the amplitude of the first noise signal, and the second noise signal can further cancel out the first noise signal in the first signal more effectively.

In some possible implementation solutions, the signal adjustment circuit may further include a second input end. The second input end of the signal adjustment circuit may be connected to an output end of the operation circuit. The signal adjustment circuit may be specifically configured to adaptively adjust the amplitude of the first noise signal based on a target value of the first communication signal. This design can effectively improve effect of filtering out noise, so that precision of the first communication signal output by the operation circuit is higher, and communication reliability of the system is further improved.

In some possible implementation solutions, the power line communication system may further include a sampling circuit. An input end of the sampling circuit may be connected to the output end of the power conversion device, and an output end of the sampling circuit may be connected to the first input end of the signal adjustment circuit. The sampling circuit may be specifically configured to collect the first noise signal obtained through isolation performed by the signal isolation circuit and output the first noise signal to the signal isolation circuit.

In specific implementation, the sampling circuit may include an automatic gain controller and an analog-to-digital converter connected to the automatic gain controller. The automatic gain controller may be connected to the output end of the power conversion device, and the analog-to-digital converter may be connected to an output end of the signal adjustment circuit. The automatic gain controller may automatically control the amplitude of the first noise signal by changing an input-output compression ratio, to provide a condition for the analog-to-digital converter to take a sample in an optimal linear region, and implement a high-fidelity design of noise signal collection.

In some possible implementation solutions, the signal adjustment circuit includes but is not limited to a digital filter. The signal adjustment circuit may adaptively adjust the phase and the amplitude of the first noise signal based on a design of a circuit structure of the power conversion device, to compensate for a system difference caused by the circuit structure, so that a phase of an adjusted second noise signal can be closer to an inverse phase of the first noise signal, and the amplitude of the second noise signal can be closer to the amplitude of the first noise signal. In this way, after entering the operation circuit subsequently, the second noise signal can cancel out the first noise signal in the first signal more effectively.

In some possible implementation solutions, the operation circuit includes but is not limited to a multiplier.

In some possible implementation solutions, the power conversion device includes but is not limited to an inverter, an energy storage battery, and the like.

### BRIEF DESCRIPTION OF DRAWINGS

FIG. 1 is a diagram of a power line communication system according to an embodiment of this application;
FIG. 2 is a diagram of a structure of a photovoltaic power generation system;
FIG. 3 is a diagram of a partial architecture of a power line communication system according to an embodiment of this application; and
FIG. 4 is a diagram of a partial structure of a power line communication system according to an embodiment of this application.

### DESCRIPTION OF EMBODIMENTS

To make the objectives, technical solutions, and advantages of this application clearer, the following further describes embodiments of this application in detail with reference to the accompanying drawings. However, example implementations may be implemented in a plurality of forms, and should not be construed as being limited to implementations described herein. A same reference sign denotes a same or similar structure in the drawings, and therefore repeated descriptions thereof are omitted. The words expressing a position and a direction described in embodiments of this application are all described by using the accompanying drawings as an example, but changes may also be made as required, and all the changes fall within the protection scope of this application. The accompanying drawings in embodiments of this application are merely used to illustrate a relative position relationship and do not represent an actual scale.

It should be noted that specific details are set forth in the following description to facilitate understanding of this application. However, embodiments of this application can be implemented in a plurality of other manners different from those described herein, and a person skilled in the art can perform similar promotion without departing from the connotation of embodiments of this application. Therefore, this application is not limited to the specific implementations disclosed below.

PLC is a communication technology in which a power line is used as a communication medium to transmit a signal in a carrier manner. One main advantage of PLC over other communication technologies is that PLC can use an existing power line as a transmission medium without a need to build a new line, which greatly reduces initial deployment costs. In addition, there is also no need to separately maintain the line, which further reduces subsequent maintenance costs.

Based on a low voltage power line broadband communication interoperability technical specification from State Grid Corporation of China, an institute of electrical and electronics engineers (institute of electrical and electronics engineers, IEEE) 1901.1 standard is officially released and implemented. This standard divides a PLC protocol stack into the following layers: an application layer, a transport layer, a network layer, a data link layer, and a physical layer. The data link layer includes a network management sublayer and a media access control (medium access control, MAC) sublayer. The network management sublayer is responsible for aggregation and fragmentation of application layer packets, network management, and route update and maintenance. The MAC sublayer is responsible for preempting a physical channel to provide reliable communication. The physical layer is responsible for performing encoding and modulation on data from the MAC sublayer and then sending the data to the power line, and performing demodulation and decoding on a signal received from the power line and then sending the signal back to the MAC sublayer.

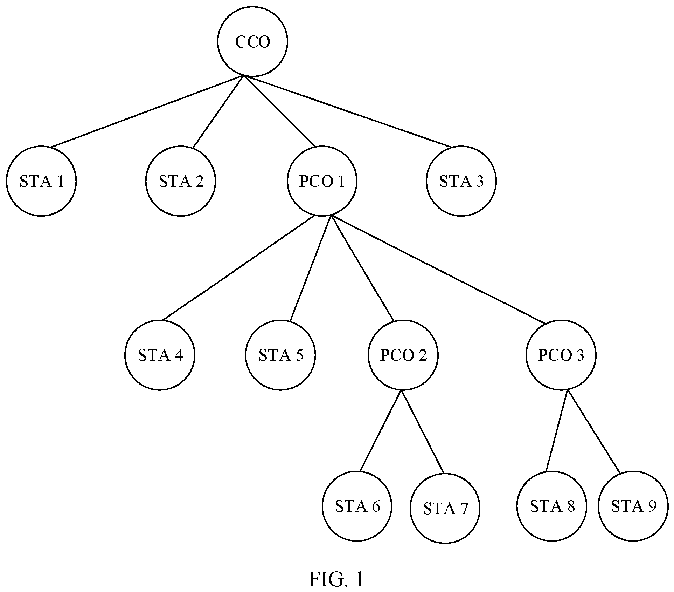

FIG. 1 is a diagram of a PLC system according to an embodiment of this application. Electronic device roles that communicate in the PLC system may include a central coordinator (central coordinator, CCO), a proxy coordinator (proxy coordinator, PCO), and a station (station, STA). The CCO may schedule or control one or more STAs by sending a control frame to the one or more STAs. For example, the control frame may be used to indicate maximum power configured for the one or more stations. The one or more STAs may report device statuses of the one or more STAs by sending a service frame to the CCO. The PCO may assist an STA that has a far communication distance from the CCO to access a PLC network, and may further manage a device status of an STA connected to the PCO, and report the device status of the STA connected to the PCO to the CCO. It should be noted that, in embodiments of this application, the PCO may also be referred to as a proxy station, and the STAmay also be referred to as a discovery station. Unless otherwise specified, the station in embodiments of this application means the discovery station (STA).

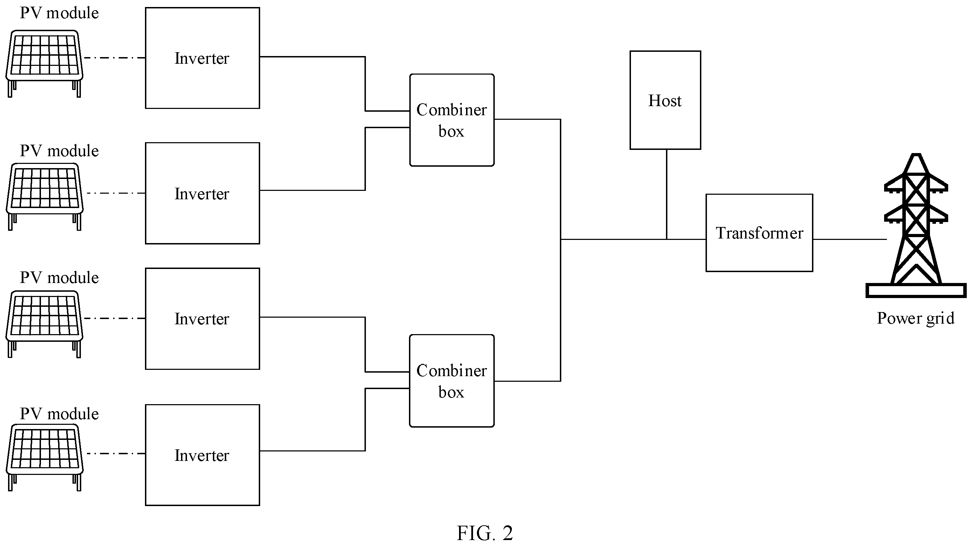

PLC can be applied to a plurality of scenarios. For example, in a photovoltaic power generation system shown in FIG. 2, direct currents generated by photovoltaic modules are converged to inverters, and the inverters convert the direct currents into alternating currents, and then transmits the alternating currents to combiner boxes. The combiner boxes converge the alternating currents output by the plurality of inverters and transmits the alternating currents to a transformer, and the transformer converts the alternating currents into high-voltage electricity and then transmits the high-voltage electricity to a power grid. A host is connected between the combiner boxes and the transformer. The host may be configured to schedule each inverter and receive a device status of each inverter. Herein, the host and the inverters are respectively the central coordinator and the stations in the foregoing PLC system.

As power of the photovoltaic power generation system evolves, power of the inverter keeps increasing. Because a communication signal is integrated onto a power line, an increase in the power of the inverter inevitably causes noise deterioration on a PLC communication frequency band, and PLC communication performance also deteriorates. To resolve a noise problem, a current inverter usually uses an analog circuit at an output stage to implement suppression effect on power supply noise. However, as a photovoltaic array becomes increasingly large, a higher requirement is imposed on a communication distance and a communication delay of the PLC system. In a long-distance communication scenario, the communication frequency band of the PLC system is relatively low. The analog circuit is large in volume at a low frequency, and therefore usually occupies a large board layout area and has high costs.

In view of this, embodiments of this application provide a PLC system. The PLC system can effectively reduce impact of power supply noise on a communication signal and improve reliability of the communication signal on a premise that a small size design is implemented. The following further describes embodiments of this application in detail with reference to the accompanying drawings and specific embodiments.

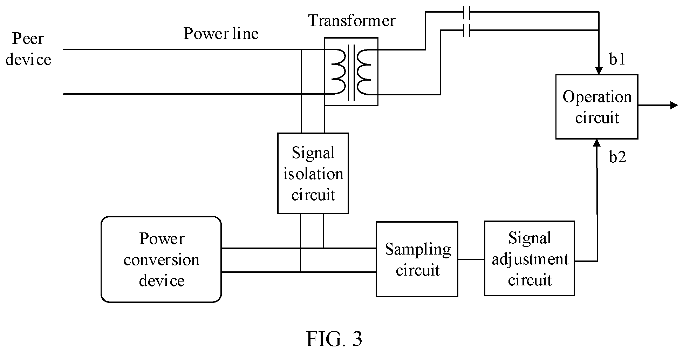

FIG. 3 is a diagram of a partial architecture of a power line communication system according to an embodiment of this application. In this embodiment of this application, the PLC system may include a power conversion device and a peer device. The power conversion device may communicate with the peer device through a power line, and the peer device can transmit a first communication signal to the power conversion device through the power line. For example, the power conversion device in this embodiment of this application may be a station, and the peer device may be a central coordinator. In this case, the first communication signal may be a control frame. Alternatively, the power conversion device in this embodiment of this application may be a central coordinator, and the peer device may be a station. In this case, the first communication signal may be a service frame.

The PLC system may further include a signal isolation circuit, a signal adjustment circuit, a transformer, and an operation circuit. An output end of the power conversion device may be connected to the power line through the signal isolation circuit, and the signal isolation circuit may be configured to isolate an input signal of the power line to obtain a first noise signal of the power conversion device. Because there is a power supply inside the power conversion device, power supply noise definitely exists at the output end of the power conversion device and the power line. The first noise signal herein is the power supply noise. An input end of the transformer may also be connected to the power line, and the transformer may be configured to filter out a power signal in the input signal of the power line and then output a first signal. In this embodiment, the first signal may include the first noise signal and the first communication signal.

A first input end a1 of the signal adjustment circuit may be connected to the output end of the power conversion device, and the signal adjustment circuit may be configured to perform phase inversion on the first noise signal and output a second noise signal obtained through phase inversion.

The operation circuit includes a first input end b1 and a second input end b2. The first input end b1 of the operation circuit may be connected to an output end of the transformer, the second input end b2 of the operation circuit may be connected to an output end of the signal adjustment circuit, and the operation circuit may be configured to output the first communication signal based on the first signal output by the transformer and the second noise signal output by the adjustment circuit. In this way, suppression effect on the power supply noise of the power conversion device is implemented, impact of the power supply noise on the first communication signal can be effectively reduced, and reliability of the first communication signal can be improved.

In some possible embodiments of this application, the PLC system may further include a sampling circuit. An input end of the sampling circuit may be connected to the output end of the power conversion device, and an output end of the sampling circuit may be connected to the first input end of the signal adjustment circuit. The sampling circuit may be configured to collect the first noise signal obtained through isolation performed by the signal isolation circuit and output the first noise signal to the signal isolation circuit. In addition, the power conversion device may further include a control circuit. The control circuit may be connected to an output end of the operation circuit, and may be configured to demodulate the first communication signal and perform subsequent processing.

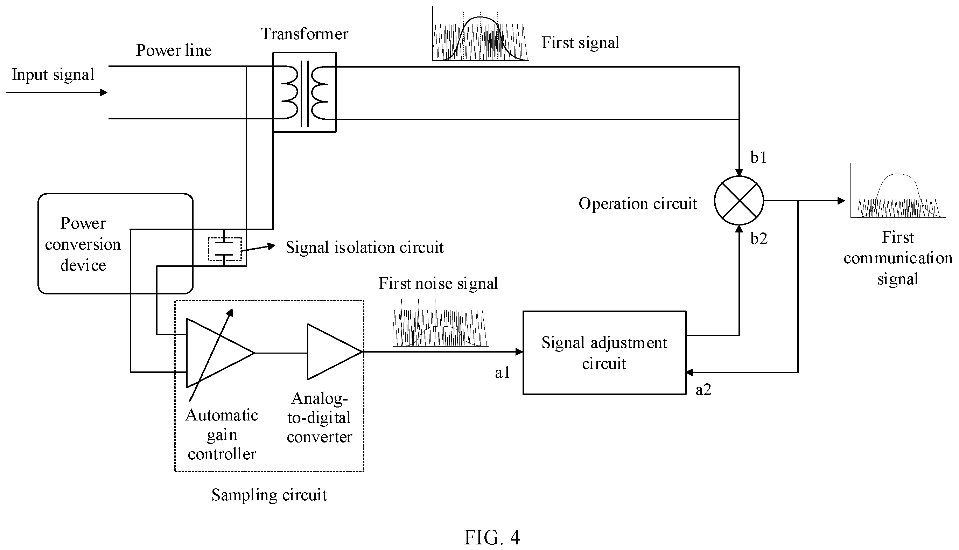

FIG. 4 is a diagram of a partial structure of a power line communication system according to an embodiment of this application. A specific type of a power conversion device is not limited in embodiments of this application. For example, the power conversion device may be an inverter, an energy storage battery, or the like. A signal isolation circuit includes but is not limited to an isolation capacitor or an isolation inductor. For example, the signal isolation circuit may be specifically a differential-mode capacitor, a differential-mode inductor, a common-mode capacitor, a common-mode inductor, or the like. The signal isolation circuit may be integrated into the power conversion device. In this way, board space occupied by the signal isolation circuit in the power conversion device can be reduced, which helps reduce a volume of the power conversion device. Certainly, in some other implementations, the signal isolation circuit may be disposed outside the power conversion device and may be specifically designed based on a structural layout of the power conversion device. This is not limited in this application.

When the sampling circuit is specifically disposed, the sampling circuit may include an automatic gain controller (automatic gain control, AGC) and an analog-to-digital converter (analog-to-digital converter, ADC). An input end of the automatic gain controller is connected to an output end of the power conversion device, an output end of the automatic gain controller is connected to an input end of the analog-to-digital converter, and an output end of the analog-to-digital converter is connected to an input end of a signal adjustment circuit. The automatic gain controller may automatically control an amplitude of a first noise signal by changing an input-output compression ratio, to provide a condition for the analog-to-digital converter to take a sample in an optimal linear region, and implement a high-fidelity design of noise signal collection.

In embodiments of this application, the signal adjustment circuit includes but is not limited to a digital filter. The signal adjustment circuit may adaptively adjust a phase of the first noise signal based on a design of a circuit structure of the power conversion device, to compensate for a system difference caused by the circuit structure, so that a phase of an adjusted second noise signal can be closer to an inverse phase of the first noise signal.

Still refer to FIG. 4. When an operation circuit is specifically disposed, the operation circuit may be implemented by using a multiplier. In this way, after superimposing an input first signal and the second noise signal, the operation circuit may cancel out or partially cancel out the first noise signal in the first signal, and output a first communication signal.

In some possible embodiments, the signal adjustment circuit may be further configured to adjust the amplitude of the first noise signal, so that an amplitude of the second noise signal output by the signal adjustment circuit can be closer to the amplitude of the first noise signal, and the second noise signal can further cancel out the first noise signal in the first signal more effectively.

It may be understood that, if the second noise signal does not completely cancel out the first noise signal in the first signal, some noise signals still inevitably exist in the first communication signal output by the operation circuit. To reduce impact of these noise signals on the first communication signal, in some possible embodiments, the signal adjustment circuit may further include a second input end a2. The second input end a2 of the signal adjustment circuit may be connected to an output end of the operation circuit. The signal adjustment circuit may be specifically configured to adaptively adjust the phase and the amplitude of the first noise signal based on a target value of the first communication signal and by using a noise cancellation amount as a target, and output the second noise signal. The target value of the first communication signal includes but is not limited to a signal-to-noise ratio of the first communication signal. Using this design can effectively improve effect of filtering out the noise signal, so that precision of the first communication signal output by the operation circuit is improved, and communication reliability of the PLC system is further improved.

In addition, in embodiments of this application, components such as the sampling circuit, the signal adjustment circuit, and the operation circuit may be integrated into the power conversion device, or may be disposed outside the power conversion device, for example, disposed in a controller for the power conversion device. This is not limited in this application. Specifically, this may be designed based on the structural layout of the power conversion device.

In conclusion, in the PLC system provided in embodiments of this application, the power supply noise of the power conversion device and the communication signal are separated, so that the power supply noise can be effectively suppressed, to resolve a problem of communication performance deterioration caused by power evolution of the power conversion device, and effectively improve communication reliability of the PLC system.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power line communication system, wherein the power line communication system comprises a power conversion device, a signal isolation circuit, a signal adjustment circuit, a transformer, and an operation circuit, wherein
an output end of the power conversion device is connected to a power line through the signal isolation circuit, and the signal isolation circuit is configured to isolate an input signal of the power line to obtain a first noise signal of the power conversion device;
a first input end of the signal adjustment circuit is connected to the output end of the power conversion device, and the signal adjustment circuit is configured to perform phase inversion on a phase of the first noise signal and output a second noise signal;
an input end of the transformer is connected to the power line, and the transformer is configured to filter out a power signal in the input signal of the power line and then output a first signal; and
the operation circuit outputs a first communication signal based on the first signal and the second noise signal.

2. The power line communication system according to claim 1, wherein the first signal comprises the first noise signal and the first communication signal.

3. The power line communication system according to claim 1 or 2, wherein the signal isolation circuit comprises an isolation capacitor or an isolation inductor.

4. The power line communication system according to any one of claims 1 to 3, wherein the signal isolation circuit is integrated into the power conversion device.

5. The power line communication system according to any one of claims 1 to 4, wherein the signal adjustment circuit is further configured to adjust an amplitude of the first noise signal.

6. The power line communication system according to claim 5, wherein a second input end of the signal adjustment circuit is connected to an output end of the operation circuit, and the signal adjustment circuit is specifically configured to adjust the amplitude of the first noise signal based on a target value of the first communication signal.

7. The power line communication system according to any one of claims 1 to 6, wherein the power line communication system further comprises a sampling circuit, an input end of the sampling circuit is connected to the output end of the power conversion device, an output end of the sampling circuit is connected to the first input end of the signal adjustment circuit, and the sampling circuit is configured to collect and output the first noise signal obtained through isolation performed by the signal isolation circuit.

8. The power line communication system according to claim 7, wherein the sampling circuit comprises an automatic gain controller and an analog-to-digital converter connected to the automatic gain controller, the automatic gain controller is connected to the output end of the power conversion device, and the analog-to-digital converter is connected to the input end of the signal adjustment circuit.

9. The power line communication system according to any one of claims 1 to 8, wherein the signal adjustment circuit comprises a digital filter.

10. The power line communication system according to any one of claims 1 to 9, wherein the power conversion device comprises an inverter.
